# EUROPEAN PATENT SPECIFICATION

(11) **EP 3 018 939 B1**
(45) Date of publication and mention of the grant of the patent: **14.08.2019**
(21) Application number: 14820523.0
(22) Date of filing: 17.06.2014
(51) Int. Cl.: H04W 48/16

(54) **COMMUNICATION TERMINALS AND COMMUNICATION SYSTEM**
KOMMUNIKATIONSENDGERÄTE UND KOMMUNIKATIONSSYSTEM
TERMINAUX DE COMMUNICATION ET SYSTÈME DE COMMUNICATION

(30) Priority: 05.07.2013 JP 2013141975
(43) Date of publication of application: 11.05.2016
(73) Proprietor: Panasonic Intellectual Property Management Co., Ltd., Osaka-shi, Osaka 540-6207 (JP)
(72) Inventor: SHINOMIYA, Hirotatsu, Osaka-shi, Osaka 540-6207 (JP); NIMURA, Seiji, Osaka-shi, Osaka 540-6207 (JP); ODA, Tomohiro, Osaka-shi, Osaka 540-6207 (JP); AOKI, Takaaki, Osaka-shi, Osaka 540-6207 (JP)
(74) Representative: Appelt, Christian W.
(86) International application number: PCT/JP2014/003240
(87) International publication number: WO 2015/001742

(56) References cited:
- EP-A1- 2 566 282
- WO-A1-2011/155191
- WO-A1-2014/038161
- JP-A- 2006 067 178
- US-A1- 2010 124 213
- US-A1- 2013 107 756

## Description

### TECHNICAL FIELD

This invention generally relates to communication terminals and communication systems, and more specifically relates to a communication terminal configured to perform wireless communication and a communication system that includes the communication terminal.

### BACKGROUND ART

Conventionally, there exist communication systems in which a network is constructed between a coordinator and a device(s), and the coordinator and the device perform communication based on a wireless signal. In such a communication system, the device constructs a network with any one of coordinators and establish a communication connection with this coordinator (refer to JP 2000-125349A, for example). Furthermore, US 2013/107756 A1 generally discloses a method of an access point scanning order and a related mobile communication device in a wireless local area network.

For example, in the IEEE (Institute of Electrical and Electronics Engineers) 802.15.4 standard, a communication connection is established in the following manner.

First, a device (a slave) broadcasts (multicasts) a beacon request. Then, a coordinator (a master) that has received the beacon request sends back a beacon. The device receives the beacon that has been sent back from the coordinator, and stores, in a reception buffer, coordinator information which is information on a corresponding coordinator obtained from the received beacon. Note that the beacon request is also referred to as a report requesting signal, and the beacon is also referred to as a report signal.

In a subsequent association processing between the coordinator and the device, the device transmits an association request to the coordinator that has transmitted the beacon. The coordinator, upon receiving the association request from the device, determines whether the connection should be permitted or refused, and sends back an association response which includes information about connection permission or connection refusal, to the device. If the association response is connection permission, the association processing is completed.

In a case where a plurality of the coordinators exist, the device stores, in the reception buffer, coordinator information on each of the coordinators that have sent back the beacon. Then, the device selects one coordinator that satisfies a condition such as a received signal strength indication based on respective coordinator information stored in the reception buffer, and transmits the association request to the selected coordinator.

That is to say, the device needs to register one of the coordinators in association with this device, and broadcasts the beacon request in order to search for coordinators, and searches for coordinators that exist in the vicinity of the device based on the beacons sent back from the coordinators. Then, the device selects a most appropriate coordinator from the coordinators that exist in the vicinity of the device, and registers this most appropriate coordinator.

Also, in a case where there are systems in which the communication channel used in wireless communication is different for each coordinator, a device communicates with a coordinator using one communication channel that is selected from a plurality of communication channels. In this case, the device sequentially selects a communication channel one by one from the plurality of communication channels, and broadcasts the beacon request to search for coordinators that exist in the vicinity of the device using each of the plurality of communication channels.

In the case where the device broadcasts the beacon request by sequentially selecting a communication channel one by one from the plurality of communication channels in an environment in which a plurality of coordinators exist in the vicinity of the device, a large number of coordinators send back the beacons. However, there is a limit in the number of pieces of coordinator information that can be stored in the reception buffer of the device depending on the capacity of the reception buffer. Therefore, there is a possibility that pieces of coordinator information on all of the coordinators that have sent back the beacons cannot be stored, and thus there is a possibility that, even in a case where a more appropriate coordinator that satisfies the condition such as the received signal strength indication exists, the coordinator information on this appropriate coordinator cannot be stored in the reception buffer. That is, there was a problem in that, in spite of a more appropriate coordinator existing in the vicinity of the device, the appropriate coordinator cannot be found.

### SUMMARY OF INVENTION

The present invention has been made in view of the above-described problems, and an object of the present invention is to provide a communication terminal that can, in the case where a coordinator is searched for using a plurality of communication channels, more reliably search for a most appropriate coordinator among a plurality of coordinators, and a communication system.

A communication terminal according to an aspect of the present invention is a communication terminal that constitutes a device configured to construct a network with a selected one of a plurality of coordinators and perform communication with the selected coordinator based on a wireless signal. The communication terminal includes: a wireless communication portion configured to communicate with the selected one of the plurality of coordinators using a selected one of a plurality of communication channels, the wireless communication portion also being configured to transmit a search signal for searching for one coordinator that is most appropriate for communicating with among the plurality of coordinators, and to receive a response signal sent back by a coordinator which is at least one of the plurality of coordinators that has received the search signal, on a communication channel which is sequentially selected one by one from the plurality of communication channels; and a reception buffer configured to store pieces of coordinator information each of which is information on a different one of the coordinators obtained from a response signal received by the wireless communication portion. The wireless communication portion is configured to transmit the search signal on a communication channel which is sequentially selected one by one from the plurality of communication channels in accordance with a first sequence, and to, when the number of pieces of coordinator information obtained from response signals each of which is sent back by a coordinator which is at least one of the plurality of coordinators that has received the search signal and then stored in the reception buffer reaches an upper limit value, transmit the search signal on a communication channel which is sequentially selected one by one from the plurality of communication channels in accordance with a second sequence that is different from the first sequence if a network cannot be constructed with a coordinator that corresponds to one of the pieces of the coordinator information stored in the reception buffer.

A communication system according to an aspect of the present invention includes a device constituted by the communication terminal of an aspect of the present invention and a plurality of coordinators configured to communicate with the device based on a wireless signal.

### BRIEF DESCRIPTION OF DRAWINGS

FIG. 1 is a block diagram illustrating a schematic configuration of a communication system of Embodiment 1;
FIG. 2 is a communication sequence diagram illustrating processing of searching for a coordinator by a device of Embodiment 1;
FIG. 3 is a flowchart illustrating operations of the device of Embodiment 1;
FIG. 4 is a flowchart illustrating operations of the device of Embodiment 1;
FIG. 5 is a flowchart illustrating operations of the device of Embodiment 1;
FIG. 6 is a table illustrating a list of coordinators of Embodiment 1;
FIG. 7 is a flowchart illustrating operations of a device of Embodiment 2;
FIG. 8 is a block diagram illustrating a configuration of a coordinator of Embodiment 3; and
FIG. 9 is a flowchart illustrating operations of a coordinator of Embodiment 3.

### DESCRIPTION OF EMBODIMENTS

Hereinafter, embodiments of the present invention will be described with reference to the drawings.

### Embodiment 1

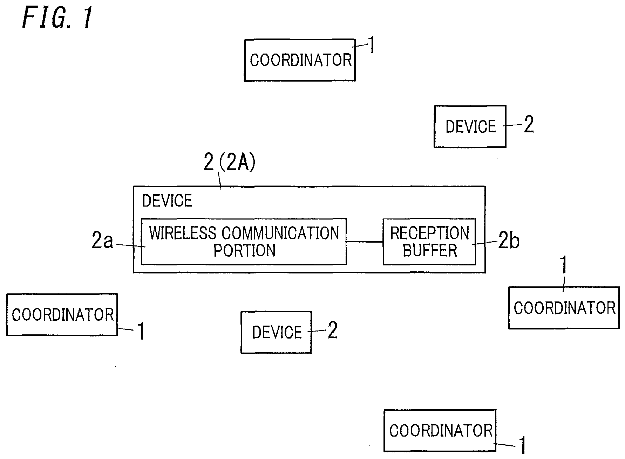

FIG. 1 illustrates a configuration of a communication system of the present embodiment. A plurality of coordinators 1 and a plurality of devices 2 exist in the communication system, and communication is performed between coordinators 1 and devices 2 based on wireless packets (wireless signals). For example, a coordinator 1 is constituted by a wireless controller in a house, and the devices 2 are constituted by an air-conditioning apparatus in a house, a cooking heater, a measurement unit that measures an electric power consumption amount at various places in a house, and the like. An apparatus monitoring control system such as a HEMS (Home Energy Management System) that performs monitoring control on the devices 2 can be constituted by a coordinator 1 sending and receiving information to and from a not-shown host server.

The device 2 includes a wireless communication portion 2a and a reception buffer 2b. Note that the device 2 corresponds to a communication terminal of an aspect of the present invention.

The wireless communication portion 2a is configured to select one communication channel from a plurality of communication channels CH1 to CHn, and perform transmission and reception of a wireless packet. Also, the wireless communication portion 2a is configured to select a (most) appropriate coordinator 1 from coordinators 1 that exist in the vicinity of the device 2, associate the selected coordinator 1 with the device 2, and constitute a network and establish a communication connection with the associated coordinator 1.

The reception buffer 2b has a buffer function of storing later-described coordinator information.

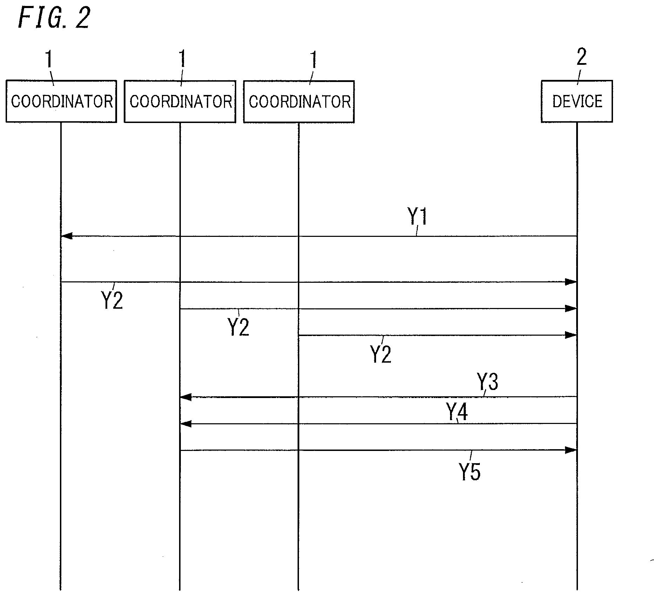

The wireless communication portion 2a of a device 2 that is not participating in any networks of coordinators 1 broadcasts (multicasts) a beacon request Y1, as shown in FIG. 2. Then, each of one or more coordinators 1 that has received the beacon request Y1 sends back a beacon Y2. The wireless communication portion 2a of the device 2 receives the one or more beacons Y2 that has been transmitted from the one or more coordinators 1, and stores, in the reception buffer 2b, one or more pieces of coordinator information each of which is information on the coordinator 1 obtained from the beacon Y2. The wireless communication portion 2a executes transmission processing of the beacon request Y1 and reception processing of the beacon Y2 on a communication channel which is sequentially selected one by one from a plurality of communication channels. Note that the beacon request Y1 corresponds to a search signal of an aspect of the present invention, and the beacon Y2 corresponds to a response signal of an aspect of the present invention.

In a subsequent association processing between a coordinator 1 and the device 2, the device 2 transmits an association request Y3 to one coordinator 1 among the coordinators 1 that have transmitted the beacons Y2. Furthermore, the device 2 also transmits a data request Y4 to the coordinator 1 to which the association request Y3 is transmitted. The coordinator 1, upon receiving the association request Y3 and the data request Y4 send by the device 2, determines whether the connection should be permitted or refused, and sends back, to the device 2, an association response Y5 which includes information regarding connection permission or connection refusal. If the association response Y5 is connection permission, the association processing is completed. The coordinator 1 determines whether the connection should be permitted or refused based on a remaining capacity, of this coordinator 1, regarding the number of the devices 2 that can be further connected to this coordinator 1, or the like.

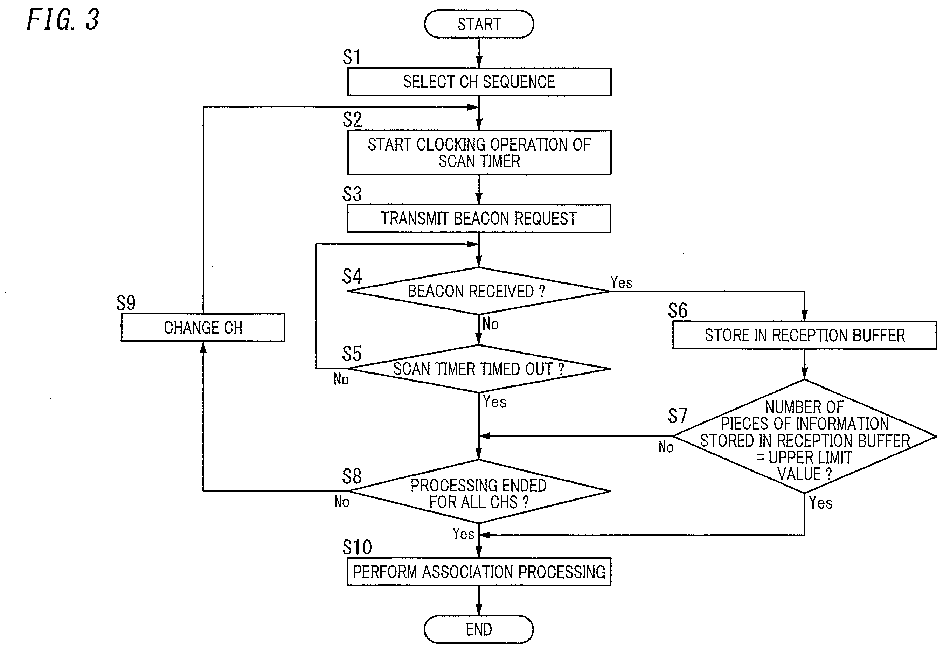

Hereinafter, the association processing performed between a device 2 and coordinators 1 will be described with reference to FIG. 3.

The wireless communication portion 2a of a device 2 (hereinafter referred to as a device 2A) that has started the association processing with respect to the coordinators 1 selects a sequence for selecting the communication channels that will be used for transmission of the beacon request Y1 and reception of the beacon Y2 (S1).

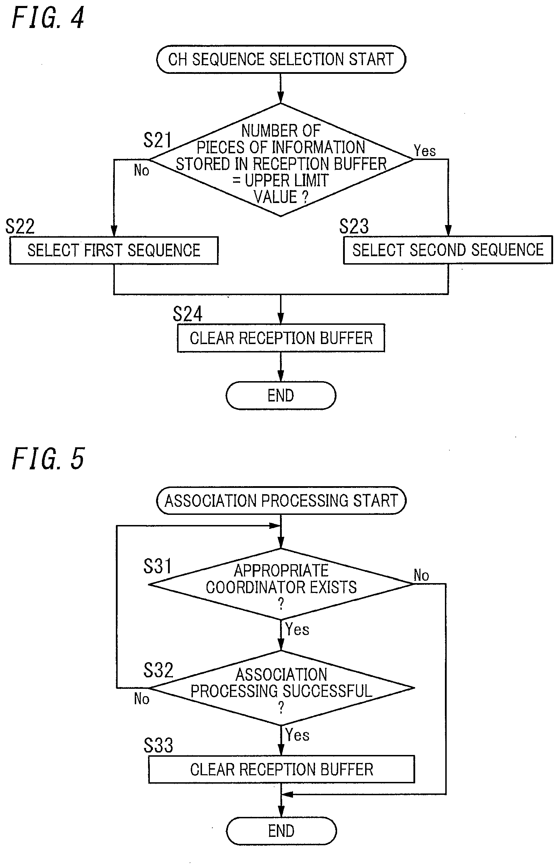

The processing for selecting the sequence for selecting the communication channels in step S1 is shown in FIG. 4. First, the wireless communication portion 2a of the device 2A judges whether or not the number of pieces of coordinator information (the number of coordinators 1 that have sent back the beacons Y2) stored in the reception buffer 2b has reached a predetermined upper limit value (S21). In the case where the device 2A is performing the association processing with the coordinators 1 for the first time, there is no coordinator information stored in the reception buffer 2b, and the wireless communication portion 2a selects a first sequence as the sequence for selecting the communication channels (S22). Channel numbers "CH1", "CH2", "CH3", ..., are given to the respective communication channels, and in the first sequence, one communication channel is selected from the plurality of the communication channels in ascending order of the communication channels, starting from the communication channel CH1. That is, in the first sequence, the communication channels are selected in the sequence CH1, CH2, CH3, CH4, and so on. Then, the wireless communication portion 2a of the device 2A clears the reception buffer 2b (clears all stored coordinator information) (S24), and the processing of step S1 is ended.

The wireless communication portion 2a of each device 2 has a function of a scan timer that measures a scan time. The wireless communication portion 2a of the device 2A starts a clocking operation of the scan timer, and starts scan processing on the communication channel CH1 which is the start channel in the first sequence (S2). The wireless communication portion 2a that has started the scan processing on the communication channel CH1 broadcasts the beacon request Yl(CH1) on the communication channel CH1 (S3). Hereinafter, a beacon request Y1 that is transmitted on a communication channel CHm is referred to as a beacon request Y1(CHm).

One or more coordinators 1 that have received the beacon request Y1(CH1) (one or more coordinators 1 that use the communication channel CH1) each send back a beacon Y2(CH1). Hereinafter, a beacon Y2 that is transmitted on a communication channel CHm is referred to as a beacon Y2(CHm).

The wireless communication portion 2a of the device 2A judges whether or not any beacons Y2(CH1) has been received (S4).

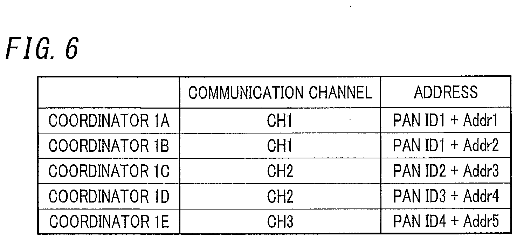

If one or more beacons Y2(CHl) has been received, the wireless communication portion 2a of the device 2A stores, in the reception buffer 2b, one or more pieces of coordinator information obtained from the one or more beacons Y2(CH1), the coordinator information being information on the coordinator 1 that sent the beacon Y2(CH1) (S6). That is, a list of the coordinators 1 that have sent back the beacons Y2 is stored in the reception buffer 2b. An example of the list is shown in FIG. 6. Each of the pieces of coordinator information is information on a coordinator 1 such as a PAN (Personal Area Network)-ID, an address, and a communication channel, and is information relating to the coordinator 1 that is included in the beacon Y2. Note that, in FIG. 6, the coordinators 1 are respectively given the reference signs 1A, 1B, 1C, ..., in order to be distinguished from each other.

Then, the wireless communication portion 2a of the device 2A judges whether or not the number of pieces of coordinator information (the number of coordinators 1 that have sent back the beacons Y2) stored in the reception buffer 2b has reached a predetermined upper limit value (S7). The upper limit value is predetermined based on the capacity of the reception buffer 2b, and is an upper limit value of the number of pieces of coordinator information that can be stored in the reception buffer 2b. If the number of pieces of coordinator information stored in the reception buffer 2b has not reached the upper limit value, the processing of the wireless communication portion 2a proceeds to step S8. If the number of pieces of coordinator information stored in the reception buffer 2b has reached the upper limit value, the processing of the wireless communication portion 2a proceeds to step S10.

Also, the wireless communication portion 2a of the device 2A judges whether or not the scan time measured by the scan timer has timed out (S5), and the processing of step S4 is repeated until the scan time measured by the scan timer times out, if no beacon Y2(CH1) has been received. If the scan time measured by the scan timer times out without receiving any beacons Y2(CH1), the processing in the wireless communication portion 2a proceeds to step S8.

If the number of pieces of coordinator information stored in the reception buffer 2b has not reached the upper limit value (S7), or the scan time measured by the scan timer times out (S5), the wireless communication portion 2a of the device 2A judges whether or not the scan processing has ended for all the communication channels (S8). If the scan processing has not ended for all the communication channels, the wireless communication portion 2a selects a communication channel CH2 whose communication number is obtained by an increment of (adding a value one to) the current communication channel CH1 (S9). Then, the wireless communication portion 2a of the device 2A starts the clocking operation by the scan timer, and starts the scan processing on the communication channel CH2 (S2). The wireless communication portion 2a that has started the scan processing on the communication channel CH2 broadcasts a beacon request Y1(CH2) on the communication channel CH2 (S3). One or more coordinators 1 that have received the beacon request Y1(CH2) (one or more coordinators 1 that use the communication channel CH2) each send back a beacon Y2(CH2).

The wireless communication portion 2a of the device 2A judges whether or not any beacons Y2(CH2) has been received (S4).

If one or more beacons Y2(CH2) has been received, the wireless communication portion 2a of the device 2A stores, in the reception buffer 2b, one or more pieces of coordinator information obtained from the one or more beacons Y2(CH2), the coordinator information being information on the coordinator 1 that sent the beacon Y2(CH2) (S6).

Then, the wireless communication portion 2a of the device 2A judges whether or not the number of pieces of coordinator information stored in the reception buffer 2b has reached the upper limit value (S7). If the number of pieces of coordinator information stored in the reception buffer 2b has not reached the upper limit value, the processing of the wireless communication portion 2a proceeds to step S8. If the number of pieces of coordinator information stored in the reception buffer 2b has reached the upper limit value, the processing of the wireless communication portion 2a proceeds to step S10.

Also, the wireless communication portion 2a of the device 2A judges whether or not the scan time measured by the scan timer has timed out (S5), and if no beacon Y2(CH2) has been received, the processing of step S4 is repeated until the scan time measured by the scan timer times out. If the scan time measured by the scan timer times out without receiving any beacons Y2(CH2), the processing in the wireless communication portion 2a proceeds to step S8.

If the number of pieces of coordinator information stored in the reception buffer 2b has not reached the upper limit value (S7), or the scan time measured by the scan timer times out (S5), the wireless communication portion 2a of the device 2A judges whether or not the scan processing has ended for all the communication channels (S8). If the scan processing has not ended for all the communication channels, the wireless communication portion 2a selects a communication channel CH3 whose communication number is obtained by an increment of the current communication channel CH2 (S9). Then, the wireless communication portion 2a of the device 2A starts the clocking operation by the scan timer, and starts the scan processing on the communication channel CH3 (S2).

Thereafter, the wireless communication portion 2a executes the scan processing while selecting the communication channels in ascending order until the number of pieces of coordinator information stored in the reception buffer 2b is judged to have reached the upper limit value in step S7 or until the scan processing is judged to have ended for all the communication channels in step S8.

Then, if the number of pieces of coordinator information stored in the reception buffer 2b is judged to have reached the upper limit value in step S7 or the scan processing is judged to have ended for all the communication channels in step S8, the wireless communication portion 2a of the device 2A performs the association processing with respect to a coordinator 1 (S10).

The association processing with respect to the coordinator 1 in step S10 is shown in FIG. 5. First, the wireless communication portion 2a of the device 2A judges whether or not a most appropriate coordinator 1 exists in the list of the coordinators 1 (pieces of coordinator information on the respective coordinators 1) stored in the reception buffer 2b (S31). Note that the wireless communication portion 2a is configured to, on receiving a beacon Y2, store a received signal strength indication (RSSI) of the beacon Y2 in association with a piece of coordinator information obtained from the beacon Y2. With reference to this, the wireless communication portion 2a determines, as a most appropriate coordinator 1, a coordinator 1 whose received signal strength indication is the largest among coordinators 1 whose received signal strength indication of the beacon Y2 is greater than or equal to a threshold.

Then, if a most appropriate coordinator 1 exists in the list of the coordinators 1 stored in the reception buffer 2b, the wireless communication portion 2a of the device 2A executes the association processing, and judges whether or not the association processing has succeeded or not (S32). Specifically, the wireless communication portion 2a transmits the association request Y3 and the data request Y4 to the appropriate coordinator 1 selected in step S31. The coordinator 1, upon receiving the association request Y3 and the data request Y4 from the device 2, determines whether the connection should be permitted or refused, and sends back, to the device 2A, the association response Y5 which includes information regarding connection permission or connection refusal. If the association response Y5 is connection permission, the wireless communication portion 2a determines that the association processing has succeeded and advances the processing to step S33. Also, if the association response Y5 is connection refusal, the wireless communication portion 2a determines that the association processing has failed, searches the list of the coordinators 1 for another most appropriate coordinator 1 again (S31), and again executes the association processing (S32).

If the association processing has succeeded, the wireless communication portion 2a of the device 2A clears the reception buffer 2b (S33), and ends the association processing of step S10.

Also, if no appropriate coordinator 1 exists in the list of the coordinators 1 in step S31, the wireless communication portion 2a ends the association processing of step S10. That is, in the case where the association processing has not succeeded, the association processing ends in a state in which the reception buffer 2b is not cleared and the stored coordinator information remains therein.

Then, in the case where the association processing has not succeeded, the wireless communication portion 2a of the device 2A restarts the association processing with respect to the coordinators 1, and selects a sequence for selecting the communication channels that are to be used for transmissions of the beacon requests Y1 to the coordinators 1 (S1). In this case, the wireless communication portion 2a of the device 2A judges whether or not the number of pieces of coordinator information stored in the reception buffer 2b has reached the predetermined upper limit value (S21).

The one or more pieces of coordinator information obtained in the previous processing is stored in the reception buffer 2b, and if the number of pieces of coordinator information has not reached the predetermined upper limit value, the wireless communication portion 2a selects the first sequence as the sequence for selecting the communication channels (S22). Then, the wireless communication portion 2a of the device 2A clears the reception buffer 2b (S24), and ends the processing of step S1. Then, the wireless communication portion 2a of the device 2A, after executing the scan processing of steps S2 to S9, executes the association processing of step S10. In this process, the wireless communication portion 2a selects, in communication channel selection processing of step S9, the communication channels in ascending order (in the sequence CH1, CH2, CH3, CH4, and so on).

Also, in the case where the number of pieces of coordinator information has reached the predetermined upper limit value, the wireless communication portion 2a selects the second sequence as the sequence for selecting the communication channels (S23). In the second sequence, the communication channels are selected in descending order of the channel number, starting from the communication channel CHn. That is, in the second sequence, the communication channels are selected in the sequence CHn, CH(n-1), CH(n-2), CH(n-3), and so on. Then, the wireless communication portion 2a of the device 2A clears the reception buffer 2b (S24), and ends the processing of step S1. Then, the wireless communication portion 2a of the device 2A, after executing the scan processing of steps S2 to S9, executes the association processing of step S10. In this process, the wireless communication portion 2a selects, in the communication channel selection processing of step S9, the communication channels in descending order (in the sequence CHn, CH(n-1), CH(n-2), CH(n-3), and so on).

That is to say, in the case where the number of pieces of coordinator information stored in the reception buffer 2b has reached the upper limit value (in the case where any pieces of coordinator information cannot be further stored in the reception buffer 2b), the selection sequence, of the communication channels, that will be used in the current scan processing is set to a sequence different from that of the previous selection sequence. In the embodiment described above, in the case where the first sequence in which the communication channels are selected in ascending order of the channel number is used, the second sequence in which the communication channels are selected in descending order of the channel number will be used in the next scan processing, if the number of pieces of coordinator information stored in the reception buffer 2b has reached the upper limit value. Note that a configuration may be possible in which, in the case where the second sequence in which the communication channels are selected in descending order of the channel number is used, the first sequence in which the communication channels are selected in ascending order of the channel number will be used in the next scan processing, if the number of pieces of coordinator information stored in the reception buffer 2b has reached the upper limit value.

For example, assume that a large number of coordinators 1 have sent back the beacons Y2 in one scan processing, and that the device 2 was thereby unable to store all pieces of coordinator information of the coordinators 1 that sent back the beacons Y2 in the reception buffer 2b, and was unable to perform association processing with respect to an appropriate coordinator 1. In the present embodiment, since the selection sequence of the communication channels for the current scan processing is changed from the previous one, the coordinator information of the coordinator 1 that was unable to be stored in the reception buffer 2b in the previous scan processing can be stored in the reception buffer 2b. Accordingly, it is possible to suppress a situation where, in spite of an appropriate coordinator 1 that satisfies a condition such as the received signal strength indication existing, the device 2 is unable to store the piece of coordinator information of that coordinator 1 in the reception buffer 2b due to the scan processing in the communication channel used by that coordinator 1 not being performed. That is, the device 2 can, in the case of searching for a coordinator 1 using a plurality of communication channels, find a most appropriate coordinator 1 more reliably among a large number of coordinators 1.

Also, in the processing of step S1, the wireless communication portion 2a may use a flag indicative of the number of pieces of coordinator information stored in the reception buffer 2b has reached an upper limit value, and select the sequence for selecting the communication channels according to the state of the flag.

Also, in the processing of step S1, the wireless communication portion 2a may randomly set the start channel along with selecting between a sequence in ascending order and a sequence in descending order.

Also, as the selection sequence of the communication channel, the first sequence may be a sequence for selecting the communication channels in descending order of the channel numbers, and the second sequence may be a sequence for selecting the communication channels in ascending order of the channel numbers.

Also, as the selection sequence of the communication channels, the first sequence may be a sequence for sequentially selecting the communication channels having even channel numbers, and the second sequence may be a sequence for sequentially selecting the communication channels having odd channel numbers. Alternatively, as the selection sequence of the communication channels, the first sequence may be a sequence for sequentially selecting the communication channels having odd channel numbers, and the second sequence may be a sequence for sequentially selecting the communication channels having even channel numbers.

Also, in the case where the number of pieces of coordinator information stored in the reception buffer 2b has reached the upper limit value (S7) using the first sequence, the second sequence may be started so as to continue the first sequence.

Furthermore, the first sequence and the second sequence may be set such that the ascending order and descending order of the channel numbers and the even numbers and odd numbers of the channel numbers are appropriately combined, and the setting method of the first sequence and second sequence is not specifically limited.

Also, a configuration may be adopted in which, in the processing of step S31, the list information of the coordinators 1 stored in the reception buffer 2b is displayed on a display portion (not shown) such as a liquid crystal screen, and a user may select a most appropriate coordinator 1 from the list information of the coordinators 1.

### Embodiment 2

The configuration of a communication system of the present embodiment is similar to that of Embodiment 1, and similar elements are provided with the same reference numerals, and description thereof will be omitted.

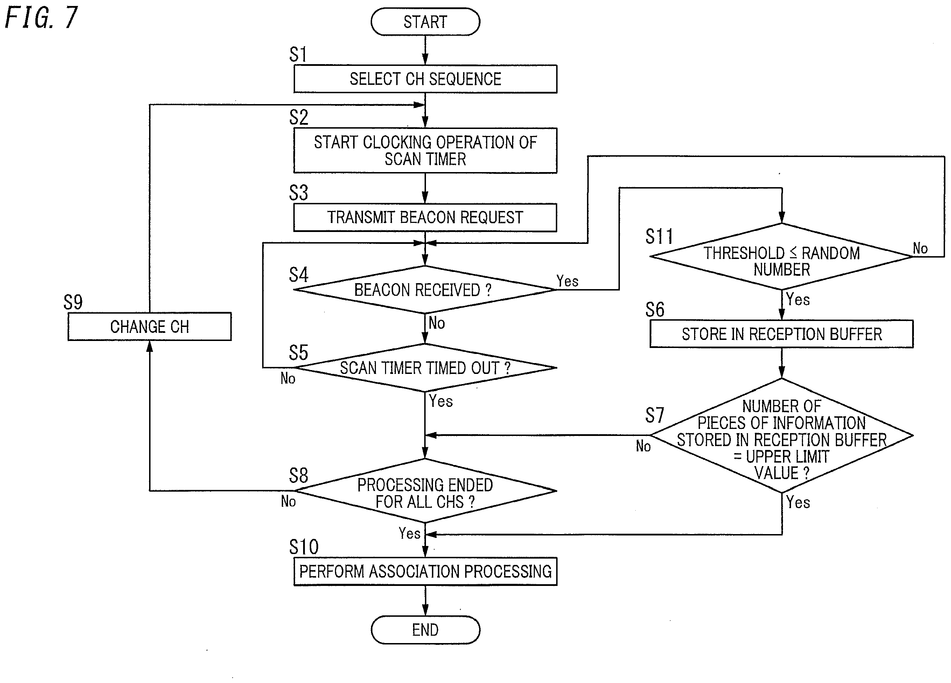

Association processing performed between coordinators 1 and a device 2 of the present embodiment is shown in FIG. 7. A wireless communication portion 2a of the device 2 of the present embodiment differs from that of Embodiment 1 in that the processing of step S11 is performed.

The wireless communication portion 2a has a function of generating a random number. When receiving a beacon Y2 (S4), the wireless communication portion 2a generates a random number, and compares the generated random number with a predetermined threshold (S11). If the generated random number is the threshold or more, the wireless communication portion 2a stores a piece of coordinator information obtained from this beacon Y2 in a reception buffer 2b (S6). If the generated random number is less than the threshold, the wireless communication portion 2a discards the beacon Y2, and returns the processing to step S4.

Accordingly, the wireless communication portion 2a, by repeating selections of the communication channels in ascending order and descending order, has an increased probability for finding a most appropriate coordinator 1.

Also, it is preferable that the device 2 is configured to, in a process of transmitting a beacon request Y1 on a communication channel which is sequentially selected one by one from a plurality of communication channels in accordance with the second sequence, randomly discards a received beacon Y2. That is, discarding of the beacon Y2 in step S11 is executed only when it is judged that the number of pieces of coordinator information stored in the reception buffer 2b has reached an upper limit value in step S21. In this configuration, the wireless communication portion 2a executes the processing for discarding of the beacon Y2 in step S11, only when there is a possibility that all pieces of coordinator information of the coordinators 1 that have sent back the beacons Y2 were unable to be stored in the reception buffer 2b. Accordingly, the device 2 can maintain the probability that the device 2 finds a most appropriate coordinator 1 when the number of coordinators 1 is small, without needlessly executing the discarding processing of the beacon Y2.

### Embodiment 3

The configuration of a communication system of the present embodiment is similar to that of Embodiment 1 or 2, and similar elements are provided with the same reference numerals, and description thereof will be omitted.

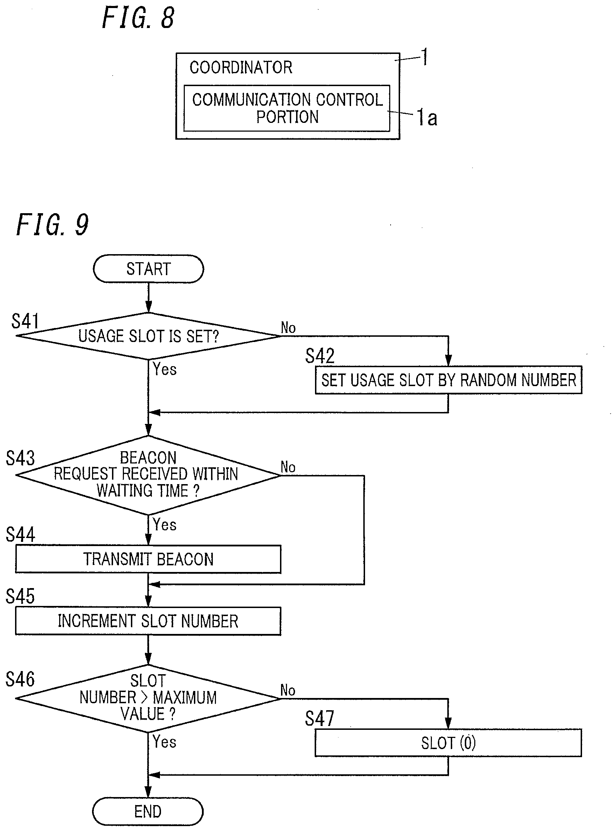

A coordinator 1 changes a transmission timing of a beacon Y2 that is sent back in response to a received beacon request Y1 every transmission of the beacon Y2. The configuration of the coordinator 1 is shown in FIG. 8, and an example of the transmission operation of the beacon Y2 by the coordinator 1 is shown in FIG. 9.

The coordinator 1 includes a communication control portion 1a, and the communication control portion 1a transmits a beacon Y2 using one slot (usage slot) among slots obtained by dividing a predetermined period (communication frame) into a plurality of periods. A plurality of the coordinators 1 set the communication frame in synchronization with each other. The communication frame is constituted by a slot (0), a slot (1), a slot (2), ..., and a slot (p) that are respectively given slot numbers 0, 1, 2, ..., and p.

The communication control portion 1a for performing transmission processing of the beacon Y2 initially judges whether or not a usage slot has been set (S41). If the processing for transmitting the beacon Y2 is being performed for the first time, the communication control portion 1a determines that the usage slot has not been set and performs setting of the usage slot to be used for the first time transmission of the beacon Y2 (S42). The communication control portion 1a has a function to generate a random number, and sets the slot that corresponds to the generated random number to the usage slot. In this example, the usage slot is set in step S42 to slot (q).

Then, the communication control portion 1a starts clocking of a predetermined waiting time when the processing of step S41 or step S42 is completed, and judges whether or not the beacon request Y1 from a device 2 is received within the waiting time (S43). If the communication control portion 1a receives the beacon request Y1 before the waiting time elapses, the communication control portion 1a sends back the beacon Y2 using a usage slot (q) (S44). Also, if the waiting time elapses without receiving any beacon request Y1, the communication control portion 1a advances, the processing to step S45.

The communication control portion 1a increments the slot number q of a usage slot (q) after sending back the beacon Y2 in step S44 or after the waiting time has elapsed in step S43 (S45). Then, the communication control portion 1a judges whether or not the slot number q+1 obtained by the increment in step S45 exceeds a maximum value p of the slot number (S46). If the incremented slot number q+1 exceeds the maximum value p, the communication control portion 1a sets the slot number to 0 (S47) and ends the processing. Also, if the incremented slot number q + 1 does not exceed the maximum value p, the communication control portion 1a ends the processing.

Then, the communication control portion 1a, when performing the next transmission processing of the beacon Y2, executes the processing of steps S43 to S47, since the usage slot is already set to the slot (q+1) or slot (0) (S41). Then, the communication control portion 1a changes the usage slot to be used in the following transmission processing of the beacon Y2.

Thereafter, the coordinator 1 executes the processing of steps S41 to S47 every time the transmission processing of the beacon Y2 is performed, and changes the usage slot to be used in the transmission processing of the beacon Y2.

Accordingly, even in a case where a plurality of the coordinators 1 that use the same communication channel exist, the coordinators 1 can shift the respective timings of transmitting the beacons Y2 so as to be different from each other, and thus the collision of the beacons Y2 can be suppressed. Therefore, because the probability that the device 2 receives the beacons Y2 transmitted by the coordinators 1 increases, the probability that the device 2 finds a most appropriate coordinator 1 increases.

Also, the communication control portion 1a may set the slot number randomly instead of incrementing the slot number in step S45.

### Summary

The device 2 in each of the embodiments is a communication terminal that constitutes a device configured to construct a network with a selected one of a plurality of coordinators 1 and perform communication with the selected coordinator based on a wireless signal. The communication terminal includes a wireless communication portion 2a and a reception buffer 2b. The wireless communication portion 2a is configured to communicate with the selected one of the plurality of coordinators 1 using one communication channel selected from a plurality of communication channels. The wireless communication portion 2a is also configured to transmit a search signal (beacon request) for searching for one coordinator 1 that is most appropriate for communicating with among the plurality of coordinators 1, and receive a response signal (beacon) sent back by a coordinator 1 which is at least one of the plurality of coordinators 1 that has received the search signal, on a communication channel which is sequentially selected one by one from the plurality of communication channels. The reception buffer 2b is configured to store pieces of coordinator information each of which is information on a different one of the coordinators 1 obtained from a response signal received by the wireless communication portion 2a. The wireless communication portion 2a is configured to transmit the search signal on a communication channel which is sequentially selected one by one from the plurality of communication channels in accordance with a first sequence, and receive the response signal sent back by a coordinator 1 which is at least one of the plurality of coordinators 1 that has received the search signal. When the number of pieces of coordinator information obtained from the received response signals and stored in the reception buffer 2b reaches an upper limit value, the wireless communication portion 2a performs the following operation if a network cannot be constructed with a coordinator 1 that corresponds to one of the pieces of coordinator information stored in the reception buffer 2b. The wireless communication portion 2a transmits the search signal on a communication channel which is sequentially selected one by one from the plurality of communication channels in accordance with a second sequence that is different from the first sequence.

According to this configuration, it is possible to suppress the occurrence of a situation where, in spite of an appropriate coordinator 1 that satisfies a condition such as a received signal strength indication existing, a communication terminal cannot store a piece of coordinator information of the appropriate coordinator 1 in the reception buffer 2b. That is, there is an effect that a communication terminal can, in the case of searching for a coordinator 1 using a plurality of communication channels, find a most appropriate coordinator 1 more reliably among a large number of coordinators 1.

In an embodiment, a channel number is given to each of the plurality of communication channels. The first sequence and the second sequence may respectively be the following sequences. The first sequence is a sequence for selecting communication channels one by one from the plurality of communication channels in one of ascending order and descending order of the channel numbers. The second sequence is a sequence for selecting communication channels one by one from the plurality of communication channels in the other of ascending order and descending order of the channel numbers.

According to this configuration, the communication terminal changes the selection sequence of the communication channels, and thereby can store, in the reception buffer 2b, the coordinator information of a coordinator 1 that could not be stored in the reception buffer 2b in the previous scan processing.

In an embodiment, in the case of transmitting the search signal (beacon request Y1) on a communication channel which is sequentially selected one by one from the plurality of communication channels in accordance with the second sequence, the communication terminal preferably discards the received response signals (beacons Y2) randomly.

According to this configuration, the communication terminal does not execute discarding processing of the response signals (beacons Y2) needlessly, and the probability that the communication terminal finds a most appropriate coordinator 1 can be maintained when the number of the coordinators 1 is small.

Also, a communication system is configured by a device 2 that is constituted by any of the above communication terminals and a plurality of coordinators 1 configured to communicate with the device 2 based on a wireless signal.

According to this configuration, it is possible to suppress the occurrence of a situation where, in spite of an appropriate coordinator 1 that satisfies a condition such as a received signal strength indication existing, a communication terminal (device 2) cannot store a piece of coordinator information of the appropriate coordinator 1 in the reception buffer 2b. That is, a communication terminal (device 2) can, in the case of searching for a coordinator 1 using a plurality of communication channels, find a most appropriate coordinator 1 more reliably among a large number of coordinators 1.

In an embodiment, in the communication system, each of the plurality of coordinators 1 may, when receiving the search signal (beacon request Y1), change the transmission timing of the response signal (beacon Y2) that is sent back in response to the search signal (beacon request Y1) every transmission of the response signal.

According to this configuration, even in a case in which a plurality of the coordinators 1 that use the same communication channel exist in the communication system, since the coordinators 1 can shift the respective transmission timings of the response signals (beacons Y2) from each other, collision of the response signals (beacons Y2) can be suppressed. Accordingly, the probability that the device 2 finds a most appropriate coordinator 1 increases, since the probability that the response signal (beacon 2) that the coordinator 1 has transmitted can be received by the device 2 increases.

## Claims

1. A communication terminal (2) that constitutes a device configured to construct a network with a selected one of a plurality of coordinators (1) and perform communication with the selected coordinator (1) based on a wireless signal, the communication terminal (2) comprising:
a wireless communication portion (2a) configured to communicate with the selected one of the plurality of coordinators (1) using a selected one of a plurality of communication channels, the wireless communication portion (2a) also being configured to transmit a search signal for searching for one coordinator (1) that is most appropriate for communicating with among the plurality of coordinators (1), and to receive a response signal sent back by a coordinator (1) which is at least one of the plurality of coordinators (1) that has received the search signal, on a communication channel which is sequentially selected one by one from the plurality of communication channels; and
a reception buffer (2b) configured to store pieces of coordinator information each of which is information on a different one of the coordinators (1) obtained from a response signal received by the wireless communication portion (2a),
the wireless communication portion (2a) being configured
to transmit the search signal on a communication channel which is sequentially selected one by one from the plurality of communication channels in accordance with a first sequence, and
to, when the number of pieces of coordinator information obtained from response signals each of which is sent back by a coordinator (1) which is at least one of the plurality of coordinators (1) that has received the search signal and then stored in the reception buffer (2b) reaches an upper limit value, transmit the search signal on a communication channel which is sequentially selected one by one from the plurality of communication channels in accordance with a second sequence that is different from the first sequence if a network cannot be constructed with a coordinator (1) that corresponds to one of the pieces of the coordinator information stored in the reception buffer (2b).

2. The communication terminal (2) according to claim 1,
wherein a channel number is given to each of the plurality of communication channels,
the first sequence is a sequence for selecting communication channels one by one from the plurality of communication channels in one of ascending order and descending order of the channel numbers, and
the second sequence is a sequence for selecting communication channels one by one from the plurality of communication channels in the other of ascending order and descending order of the channel numbers.

3. The communication terminal according to claim 1 or 2, wherein the wireless communication portion is configured to, in a case of transmitting the search signal (Y1) on a communication channel which is sequentially selected one by one from the plurality of communication channels in accordance with the second sequence, discard the received response signals (Y2) randomly.

4. A communication system comprising:
a device (2) constituted by the communication terminal according to any one of claims 1 to 3; and
the plurality of coordinators (1) configured to communicate with the device (2) based on a wireless signal.

5. The communication system according to claim 4, wherein each of the plurality of coordinators (1) is configured to, in a case of receiving the search signal (Y1), change a transmission timing of the response signal (Y2) that is sent back in response to the received search signal (Y1) every transmission of the response signal.

## Patentansprüche

1. Kommunikationsendgerät (2), das eine Vorrichtung bildet, die konfiguriert ist, um ein Netzwerk mit einem ausgewählten aus mehreren Koordinatoren (1) aufzubauen und eine Kommunikation mit dem ausgewählten Koordinator (1) basierend auf einem drahtlosen Signal durchzuführen, wobei das Kommunikationsendgerät (2) umfasst:
einen drahtlosen Kommunikationsabschnitt (2a), der konfiguriert ist, um mit dem ausgewählten der mehreren Koordinatoren (1) unter Verwendung eines ausgewählten von mehreren Kommunikationskanälen zu kommunizieren, wobei der drahtlose Kommunikationsabschnitt (2a) auch konfiguriert ist, um ein Suchsignal zum Suchen nach einem Koordinator (1) zu übertragen, der für eine Kommunikation mit den mehreren von Koordinatoren (1) am besten geeignet ist, und um ein Antwortsignal zu empfangen, das von einem Koordinator (1) zurückgesendet wird, der mindestens einer der mehreren Koordinatoren (1) ist, der das Suchsignal empfangen hat, auf einem Kommunikationskanal, der nacheinander einzeln aus den mehreren Kommunikationskanälen ausgewählt wird; und
einen Empfangspuffer (2b), der konfiguriert ist, um Teile von Koordinatorinformationen zu speichern, von denen jede eine Information über einen anderen der Koordinatoren (1) ist, die aus einem Antwortsignal erhalten wird, das von dem drahtlosen Kommunikationsabschnitt (2a) empfangen wird,
wobei der drahtlose Kommunikationsabschnitt (2a) konfiguriert ist,
um das Suchsignal auf einem Kommunikationskanal zu übertragen, der einzeln aus den mehreren Kommunikationskanälen gemäß einer ersten Sequenz nacheinander ausgewählt wird, und
um das Suchsignal, wenn die Anzahl der aus Antwortsignalen erhaltenen Koordinatorinformationen, die jeweils von einem Koordinator (1), der mindestens einer der mehreren Koordinatoren (1) ist, der das Suchsignal empfangen und dann in dem Empfangspuffer (2b) gespeichert hat, einen oberen Grenzwert erreicht, auf einem Kommunikationskanal zu übertragen, der aus den mehreren Kommunikationskanälen gemäß einer zweiten Sequenz, die sich von der ersten Sequenz unterscheidet, nacheinander ausgewählt wird, wenn ein Netzwerk nicht mit einem Koordinator (1) aufgebaut werden kann, der einem der Teile der Koordinatorinformationen entspricht, die in dem Empfangspuffer (2b) gespeichert sind.

2. Kommunikationsendgerät (2) nach Anspruch 1,
wobei für jeden der mehreren Kommunikationskanälen eine Kanalnummer vergeben wird,
die erste Sequenz eine Sequenz zum Auswählen von Kommunikationskanälen aus den mehreren Kommunikationskanälen nacheinander in einer von einer aufsteigenden Reihenfolge oder einer absteigenden Reihenfolge der Kanalnummern ist, und
die zweite Sequenz eine Sequenz zum Auswählen von Kommunikationskanälen aus den mehreren Kommunikationskanälen nacheinander in der jeweils anderen - sei es in der aufsteigenden oder in der absteigenden - Reihenfolge der Kanalnummern ist.

3. Kommunikationsendgerät nach Anspruch 1 oder 2, wobei der drahtlose Kommunikationsabschnitt konfiguriert ist, um im Falle einer Übertragung des Suchsignals (Y1) auf einem Kommunikationskanal, der aus den mehreren Kommunikationskanälen nacheinander gemäß der zweiten Sequenz ausgewählt wird, die empfangenen Antwortsignale (Y2) nach einem Zufallsprinzip zu verwerfen.

4. Kommunikationssystem, umfassend:
eine Vorrichtung (2), die durch das Kommunikationsendgerät nach einem der Ansprüche 1 bis 3 gebildet wird; und
die mehreren Koordinatoren (1), die konfiguriert sind, um mit der Vorrichtung (2) basierend auf einem drahtlosen Signal zu kommunizieren.

5. Kommunikationssystem nach Anspruch 4, wobei jeder der mehreren Koordinatoren (1) konfiguriert ist, um im Falle eines Empfangs des Suchsignals (Y1) einen Sendezeitpunkt des Antwortsignals (Y2) zu ändern, das als Reaktion auf das empfangene Suchsignal (Y1) bei jeder Übertragung des Antwortsignals zurückgesendet wird.

## Revendications

1. Terminal de communication (2) qui constitue un dispositif configuré de manière à construire un réseau avec un coordinateur sélectionné parmi une pluralité de coordinateurs (1), et à mettre en oeuvre une communication avec le coordinateur sélectionné (1) sur la base d'un signal sans fil, le terminal de communication (2) comprenant :
une partie de communication sans fil (2a) configurée de manière à communiquer avec le coordinateur sélectionné parmi la pluralité de coordinateurs (1), en utilisant un canal de communication sélectionné parmi une pluralité de canaux de communication, la partie de communication sans fil (2a) étant également configurée de manière à transmettre un signal de recherche pour rechercher un coordinateur (1) avec lequel il est plus approprié de communiquer parmi la pluralité de coordinateurs (1), et à recevoir un signal de réponse renvoyé par un coordinateur (1) qui correspond à au moins un coordinateur de la pluralité de coordinateurs (1) qui a reçu le signal de recherche, sur un canal de communication qui est sélectionné séquentiellement de manière unitaire parmi la pluralité de canaux de communication ; et
une mémoire tampon de réception (2b) configurée de manière à stocker des éléments d'informations de coordinateur dont chacun correspond à des informations sur un coordinateur différent parmi les coordinateurs (1), obtenus à partir d'un signal de réponse reçu par la partie de communication sans fil (2a) ;
la partie de communication sans fil (2a) étant configurée de manière à :
transmettre le signal de recherche sur un canal de communication qui est sélectionné séquentiellement de manière unitaire parmi la pluralité de canaux de communication, selon une première séquence ; et
lorsque le nombre d'éléments d'informations de coordinateur obtenus à partir de signaux de réponse dont chacun est renvoyé par un coordinateur (1) qui correspond à au moins un coordinateur de la pluralité de coordinateurs (1) ayant reçu le signal de recherche, et est ensuite stocké dans la mémoire tampon de réception (2b), atteint une valeur limite supérieure, transmettre le signal de recherche sur un canal de communication qui est sélectionné séquentiellement de manière unitaire parmi la pluralité de canaux de communication, selon une seconde séquence qui est différente de la première séquence, si un réseau ne peut pas être construit avec un coordinateur (1) qui correspond à l'un des éléments des informations de coordinateur stockés dans la mémoire tampon de réception (2b).

2. Terminal de communication (2) selon la revendication 1,
dans lequel un numéro de canal est attribué à chaque canal de la pluralité de canaux de communication, dans lequel la première séquence est une séquence pour sélectionner des canaux de communication, un par un, parmi la pluralité de canaux de communication, selon l'un parmi un ordre croissant et un ordre décroissant des numéros de canal, et
la seconde séquence est une séquence pour sélectionner des canaux de communication, un par un, parmi la pluralité de canaux de communication, selon l'autre ordre parmi l'ordre croissant et l'ordre décroissant des numéros de canal.

3. Terminal de communication selon la revendication 1 ou 2, dans lequel la partie de communication sans fil est configurée de manière à, dans le cas d'une transmission du signal de recherche (Y1) sur un canal de communication qui est sélectionné séquentiellement de manière unitaire parmi la pluralité de canaux de communication selon la seconde séquence, rejeter les signaux de réponse reçus (Y2) de manière aléatoire.

4. Système de communication comprenant :
un dispositif (2) constitué par le terminal de communication selon l'une quelconque des revendications 1 à 3 ; et
la pluralité de coordinateurs (1) configurée de manière à communiquer avec le dispositif (2) sur la base d'un signal sans fil.

5. Système de communication selon la revendication 4, dans lequel chaque coordinateur parmi la pluralité de coordinateurs (1) est configuré de manière à, dans le cas d'une réception du signal de recherche (Y1), modifier une temporisation de transmission du signal de réponse (Y2) qui est renvoyé en réponse au signal de recherche (Y1) reçu, à chaque transmission du signal de réponse.
